Europäisches Patentamt

European Patent Office

Office européen des brevets

(19)

(11) Veröffentlichungsnummer : **0 132 803**
**B1**

(12) # EUROPÄISCHE PATENTSCHRIFT

(45) Veröffentlichungstag der Patentschrift :
15.04.87

(51) Int. Cl.⁴ : **H 02 K 7/04**

(21) Anmeldenummer : 84108613.5

(22) Anmeldetag : 20.07.84

(54) Verfahren zum Auswuchten von bewickelten Läufern elektrischer Maschinen.

(30) Priorität : 01.08.83 DE 3327744

(43) Veröffentlichungstag der Anmeldung :
13.02.85 Patentblatt 85/07

(45) Bekanntmachung des Hinweises auf die Patenterteilung : 15.04.87 Patentblatt 87/16

(84) Benannte Vertragsstaaten :
CH DE FR GB IT LI NL SE

(56) Entgegenhaltungen :
DE-A- 2 346 345
DE-A- 2 636 167
DE-A- 3 013 704
DE-A- 3 031 622
DE-B- 1 053 088
DE-C- 1 763 447
FR-A- 2 024 091
FR-A- 2 255 589
US-A- 3 368 654

(73) Patentinhaber : Siemens Aktiengesellschaft Berlin und München
Wittelsbacherplatz 2
D-8000 München 2 (DE)

(72) Erfinder : Muck, Jürgen, Dipl.-Ing.
Heidenfelderstrasse 14
D-8707 Veitshöchheim (DE)
Erfinder : Krämer, Richard, Dipl.-Ing.
Leithenbuk 24
D-8711 Marktsteft (DE)
Erfinder : Fischer, Hans
Flürleinstrasse 18
D-8700 Würzburg (DE)

EP 0 132 803 B1

## Beschreibung

Die Erfindung bezieht sich auf ein Verfahren zum Auswuchten von bewickelten Läufern elektrischer Maschinen gemäß Oberbegriff des Patentanspruchs 1 ; ein derartiges Verfahren ist aus DE-C-17 63 447 bekannt.

Bei dem durch die DE-C-17 63 447 bekannten Verfahren werden am Umfang der Endscheibe verteilt Halteflügel zur Fliehkraftsicherung der Wickelköpfe angeformt ; die Halteflügel weisen jeweils eine parallel zu Läuferachse liegende Bohrung zur Aufnahme eines Auswuchtgewichtes auf. Bei der jeweiligen Auswuchtung wird der an beiden Stirnseiten mit je einer Isolierendscheibe versehene und bewickelte Läufer auf eine Auswuchtmaschine gebracht und die Unwucht nach Lage und Größe bestimmt. Von einer Bleidrahtrolle wird dann jeweils ein Bleidrahtstück abgeschnitten, dessen Länge der ermittelten Unwucht entspricht ; dieses Bleidrahtstück wird anschließend in die von der Auswuchtmaschine ermittelte Bohrung im Festsitz eingeschoben.

Durch die DE-A-30 13 704 ist weiterhin ein auswuchtbarer, glockenförmiger Rotor bekannt, bei dem an beiden Stirnseiten axial vor der Wicklung ein gesonderter Ring aus einem nicht ferromagnetischen Material befestigt ist ; die Ringe weisen an ihrem Stirnbereich über den Umfang verteilte stirnseitig offene Kammern auf, in die Kugeln gleicher Größe als Auswuchtgewichte eingesteckt sind. Zur Fixierung der Kugeln sind diese entweder kraftschlüssig in die Taschen stramm eingepaßt oder zusätzlich eingeklebt.

Durch die DE-A-23 63 594 ist ein Verfahren zur Auswuchtung von umlaufenden Wellen, insbesondere Turbinenläufern, bekannt, bei dem in eine umlaufende Nut an einem sich radial nach außen erstreckenden Absatz der Welle zwei zylindrische Wuchtgewichte einander radial gegenüberliegend eingeklemmt sind und nach Ortung der Unwucht in der Nut in Umfangsrichtung derart verschoben werden, daß die aus der Lage und der Größe der zwei Wuchtgewichte resultierende Kraft der Größe der Unwucht entspricht und dieser gegenüberliegt und daß anschließend diese Wuchtgewichte in der Nut verstemmt werden. Reichen diese Wuchtgewichte nicht aus, so können zusätzlich größere oder weitere Gewichte eingesetzt werden.

Durch die US-A-33 68 654 ist weiterhin eine eigenbelüftete Bremsscheibe bekannt, bei der zwischen zwei stirnseitig abdeckenden Bremsscheiben Zwischenstege derart angeordnet sind, daß radial Auswuchtplättchen einschiebbar sind, die in ihrer eingeschobenen Endstellung mittels angeformter elastischer, hinter die Zwischenstege einrastender Rastnocken fixierbar sind.

Aufgabe der vorliegenden Erfindung ist es, den Auswuchtvorgang noch weiter, insbesondere in fertigungstechnischer Hinsicht unter Berücksichtigung einer weitgehenden Automatisierungsmöglichkeit des Auswuchtens unter Einsatz von Handhabungsautomaten, zu vereinfachen.

Die Lösung dieser Aufgabe gelingt bei einem Verfahren der eingangs genannten Art durch die Lehre des Patentanspruchs 1 ; die Gegenstände der Unteransprüche kennzeichnen vorteilhafte Ausgestaltungen der Erfindung.

Bei dem erfindungsgemäßen Verfahren kann ohne wesentliche Vergrößerung der Motorbaugröße in fertigungstechnisch einfacher Weise in einem Arbeitsgang die automatische Bestückung der Taschen und gleichzeitig eine betriebssichere Fixierung der Auswuchtgewichte gewährleistet werden, wobei zweckmäßigerweise diese Taschen gleichzeitig von einem z. B. mit bis zu fünf oder sechs Zuführkanälen versehenen Zuführanordnung bestückt werden. Fällt die gemessene Auswuchtlage z. B. nicht genau mit der gemessenerweise mit nur einem Auswuchtgewicht zu bestückenden Tasche zusammen, so kann trotzdem eine möglichst vollkommene Auswuchtung erzielt werden, wenn nach einer Ausgestaltung der Erfindung entsprechend die Gewichte beidseitig dieser Tasche unsymmetrisch auf die Taschen verteilt werden.

Als fertigungstechnisch besonders einfache und trotzdem eine sichere Fixierung gewährleistende Rastverschluss-Konstruktion ist vorgesehen, daß jeweils die Tasche mit einem Rastnocken mit einer die Einstecköffnung der Tasche zumindest teilweisen verschließenden Rastnase versehen wird, die beim Einstecken des Auswuchtgewichtes weggedrückt und mit dem eingesteckten Auswuchtgewicht selbsttätig verrastet wird oder daß jeweils das Auswuchtgewicht mit einem Rastnocken mit einer auf eine Wandung der Tasche gerichteten Rastnase versehen wird, die beim Einstecken des Auswuchtgewichtes in die Tasche weggedrückt und in der fixierten Endlage des Auswuchtgewichtes mit der Tasche selbsttätig verrastet wird. Zweckmäßigerweise werden die Rastnocken jeweils einstückig an die Taschen bzw. an das Auswuchtgewicht angeformt und die Taschen selbst jeweils unmittelbar an die zwischen den Nuten des Läufer-Blechpaketes an dessen Stirnseite anliegenden Teile der Kunststoff-Isolierendscheibe mitangespritzt.

Eine besonders einfache Bestückung der Taschen mit den Auswuchtgewichten und deren gleichzeitige möglichst gute Fixierung auch bei größeren Fliehkräften ist gegeben, wenn nach einer Ausgestaltung der Erfindung die Taschen im Sinne einer parallel zur Welle des Läufers verlaufenden Einsteckrichtung für die Auswuchtgewichte ausgebildet werden. Bei axial schlecht zugänglichen Kleinmotor-Läufern wird zweckmäßigerweise vorgesehen, daß die Taschen im Sinne einer radial zur Welle verlaufenden Einsteckrichtung für die Auswuchtgewichte ausgebildet werden.

Die Erfindung sowie weitere vorteilhafte Ausgestaltungen der Erfindung werden im folgenden anhand schematisch dargestellter Ausführungsbeispiele in der Zeichnung näher erläutert. Darin

zeigen :

Figur 1 eine perspektivische Draufsicht auf einen bewickelten Läufer eines elektrischen Kleinmotors mit an die Isolierendscheibe angespritzten Taschen zur Aufnahme von Auswuchtgewichten,

Figur 2 als Teilausschnitt eine erste Ausführung einer einzelnen, stirnseitig an die Isolierendscheibe angespritzten Tasche zur Aufnahme eines Auswuchtgewichtes,

Figur 3 als Teilausschnitt eine zweite Ausführung einer einzelnen, stirnseitig an eine Isolierendscheibe angespritzten Tasche zur Aufnahme eines Auswuchtgewichtes,

Figur 4 ein mittels eines Rastverschlusses in einer parallel zur Welle des Läufers verlaufenden Tasche fixiertes Auswuchtgewicht,

Figur 5 ein mittels eines Rastverschlusses in einer radial zur Welle des Läufers verlaufenden Tasche fixiertes Auswuchtgewicht.

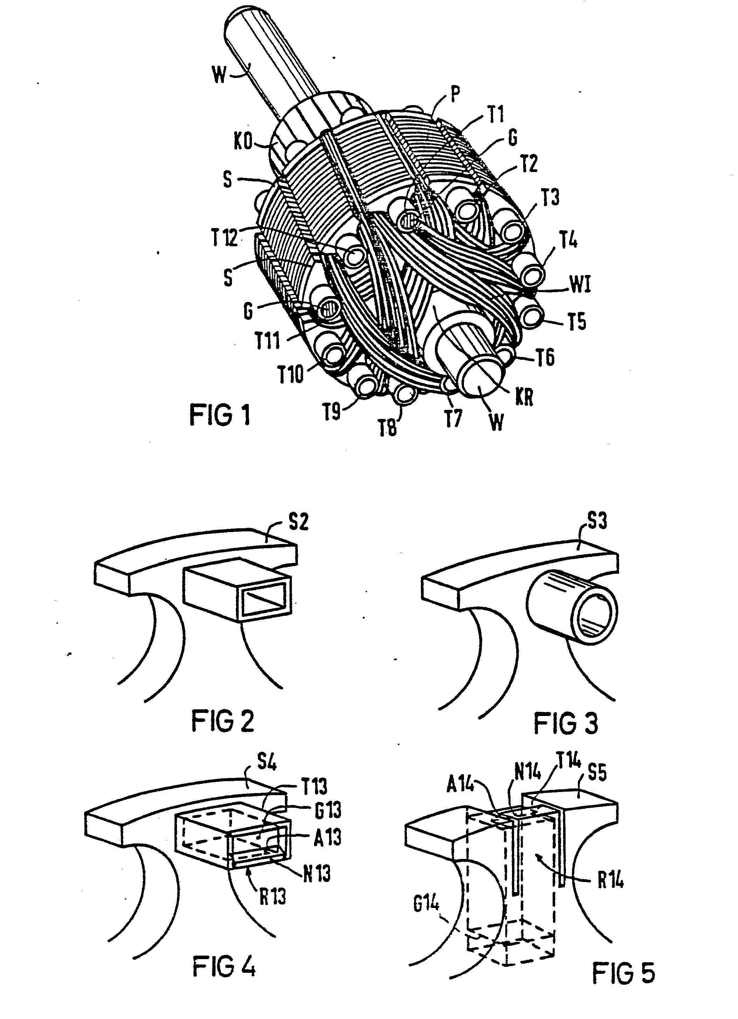

Fig. 1 zeigt in perspektivischer Draufsicht einen bewickelten Läufer eines elektrischen Kommutator-Kleinmotors. Auf der Welle W des Läufers ist neben einem Kommutator KO ein lamelliertes Blechpaket P gehalten. Das Blechpaket P ist über seinen Umfang genutet und in die zwischen den verbleibenden Zähnen eingestanzten Nuten die Läuferwicklung WI eingebracht. Vor dem Einwickeln der Läuferwicklung WI ist vor beide Stirnseiten des lamellierten Blechpaketes P eine Isolierendscheibe S gegengelegt, die mit einem angespritzten Kragen KR über die Welle W gesteckt ist. Die Isolierendscheibe S weist mit den stirnseitigen Nutöffnungen korrespondierende radiale Aussparungen auf, zwischen denen radiale Stege verbleiben, die an den stirnseitigen Endblechen in deren Zahnbereich anliegen. Die Isolierendscheibe S ist durch den Kragen KR einerseits zur Welle W zentrisch gehalten und andererseits durch die Wickelköpfe der Wicklung WI an die Stirnseiten des Blechpaketes P angedrückt.

Gemäß vorliegender Erfindung sind unmittelbar an die zwischen den Nutaussparungen verbleibenden Stege an ihren radial äußeren Enden Taschen T1 bis T12 zur Aufnahme von Auswuchtgewichten am Umfang der Isolierendscheibe konzentrisch zur Läuferachse in gleichen Winkelschritten verteilt angespritzt. Gemäß Fig. 1 sind Taschen vorgesehen, deren Öffnungen axial, d. h. parallel zur Richtung der Welle W des Läufers gerichtet sind. Fig. 2 zeigt in vergrößerter Darstellung und als Teilausschnitt einer Isolierendscheibe S2 eine solche Tasche mit rechteckigem Querschnitt ; Fig. 3 zeigt ebenfalls in vergrößerter Darstellung eine an eine Isolierendscheibe S3 einstückig angespritzte Tasche mit rundem Querschnitt.

Wie aus Fig. 1 ersichtlich, sind zwei gleichartige und gleichgroße Auswuchtgewichte G ; G in die Taschen T1 und T11 beiderseits der unbestückten Tasche T12 eingesteckt. Im vorliegenden Fall ist also davon auszugehen, daß durch die Auswuchtvorrichtung ein bestimmtes Einzel-Auswuchtgewicht für eine gemessene zentrale Auswuchtlage in der Tasche T12 erfindungsgemäß auf zwei entsprechende gleichartige, beidseitig dieser zentralen Auswuchtlage anzuordnende Gewichte G ; G in den Taschen T1 und T11 verteilt worden ist. Bei einer unsymmetrischen Verteilung aufgrund einer nicht genau mit der Tasche T12 deckungsgleichen zentralen Auswuchtlage könnte z. B. das eine Gewicht nicht in der Tasche T11 sondern in der Tasche T10 angeordnet sein oder es könnte sich in einem anderen Auswuchtfall einerseits eine Bestückung der Taschen T9-T11 und andererseits der Taschen T1 ; T2 ergeben.

Fig. 4, 5 zeigen jeweils ein Auswuchtgewicht G13 bzw. G14 das gemäß Fig. 4 in einer axial verlaufenden Tasche und gemäß Fig. 5 in einer radial verlaufenden Tasche T14 eingesteckt und gleichzeitig nach Erreichen seiner Einsteckendlage verrastet und damit formschlüssig in der Tasche gehalten ist. Fig. 5 zeigt eine besonders axial kurzbauende Ausgestaltung, da die Tasche blechpaketseitig offen und direkt in die Wandung der Isolierendscheibe S5 eingebracht ist.

Als Rastverschluß ist an die jeweilige Tasche T13 bzw. T14 ein Rastnocken R13 bzw. R14 jeweils mit seinem einen Ende elastisch angeformt. An dem freien, aus seiner eingezeichneten Betriebslage wegschwenkbaren Ende der Rastnocken R13 bzw. R14 ist jeweils eine Nase N13 bzw. N14 mit einer derartigen Anlaufschräge A13 bzw. A14 einstückig angeformt, daß beim Einstecken des jeweiligen Auswuchtgewichtes G13 bzw. G14 durch die Auswuchtvorrichtung durch Gegenstoßen des Auswuchtgewichtes G13 bzw. G14 an die Anlaufschräge A13 bzw. A14 der jeweilige Rastnocken N13 bzw. N14 selbsttätig derart wegschwenkbar ist, daß die Einsecköffnung für das Auswuchtgewicht frei zugänglich ist und die Nasen N13 bzw. N14 erst nach Erreichen der Endstecklage der Auswuchtgewichte G13 bzw. G14 über die freie Stirnseite des Auswuchtgewichtes hinweg zurückschnappt und derart das jeweilige Auswuchtgewicht in Gegeneinsteckrichtung formschlüssig sichert.

## Patentansprüche

1. Verfahren zum Auswuchten von bewickelten Läufern elektrischer Maschinen mit an der Stirnseite des Läufer-Blechpaketes (P) festgelegter Isolierendscheibe (S) mit angeformten Taschen zur Aufnahme eines im Festsitz gehaltenen einsteckbaren Auswuchtgewichtes (G), wobei die Taschen jeweils unmittelbar an die zwischen den Nuten des Läufer-Blechpaketes (P) an dessen Stirnseite anliegenden Teile der Isolierendscheibe (S) angeformt sind, dadurch gekennzeichnet, daß nur Auswuchtgewichte (G ; G) in gleicher Größe in die Taschen (T1 ; T11) beidseitig der gemessenen Auswuchtlage (Tasche T12) eingesteckt und jeweils in ihrer eingesteckten Endlage in den Taschen mittels eines Rastverschlusses (Rastnocken R13 bzw. R14 ; Rastnasen N13 bzw. N14) fixiert werden.

2. Verfahren nach Anspruch 1, dadurch gekennzeichnet, daß die Gewichte beidseitig zueinander unsymmetrisch auf die Taschen verteilt angeordnet sind.

3. Verfahren nach Anspruch 1 oder 2, dadurch gekennzeichnet, daß sämtliche Gewichte mittels einer Zuführanordnung mit mehreren Zuführkanälen gleichzeitig in die jeweiligen Taschen eingesteckt werden.

4. Verfahren nach einem der Ansprüche 1 bis 3, dadurch gekennzeichnet, daß jeweils die Tasche (T13 bzw. T14) mit einem Rastnocken (R13 bzw. R14) mit einer die Einstecköffnung der Tasche (T13 bzw. T14) zumindest teilweise verschließenden Rastnase (N13 bzw. N14) versehen wird, die beim Einstecken des Auswuchtgewichtes (G13 bzw. G14) weggedrückt und mit dem eingesteckten Auswuchtgewicht (G13 bzw. G14) selbsttätig verrastet wird.

5. Verfahren nach einem der Ansprüche 1 bis 3, dadurch gekennzeichnet, daß jeweils das Auswuchtgewicht mit einem Rastnocken mit einer auf eine Wandung der Tasche gerichteten Rastnase versehen wird, die beim Einstecken des Auswuchtgewichtes in die Tasche weggedrückt und in der fixierten Endlage des Auswuchtgewichtes mit der Tasche selbsttätig verrastet wird.

6. Verfahren nach einem der Ansprüche 1 bis 5, dadurch gekennzeichnet, daß die Rastnocken jeweils einstückig an die Tasche (T13 bzw. T14) bzw. an das Auswuchtgewicht angeformt werden.

7. Verfahren nach einem der Ansprüche 1 bis 6, dadurch gekennzeichnet, daß die Taschen im Sinne einer parallel zur Welle (W) des Läufers verlaufenden Einsteckrichtung für die Auswuchtgewichte ausgebildet werden (Fig. 1-4).

8. Verfahren nach einem der Ansprüche 1 bis 6, dadurch gekennzeichnet, daß die Taschen im Sinne einer radial zur Welle (W) des Läufers verlaufenden Einsteckrichtung für die Auswuchtgewichte ausgebildet werden (Fig. 5).

9. Verfahren nach einem der Ansprüche 1 bis 8, dadurch gekennzeichnet, daß die Taschen kreisförmig ausgebildet werden (Fig. 1, 3).

10. Verfahren nach einem der Ansprüche 1 bis 8, dadurch gekennzeichnet, daß die Taschen rechteckförmig ausgebildet werden (Fig. 4, 5).

## Claims

1. A method of balancing wound rotors of electric machines, including an insulating end plate (S) which is fixed to the end of the stack of rotor laminations (P) and which is provided with moulded pockets for the accommodation of an insertable balancing weight (G) which is held in an interference fit, where the pockets are each directly moulded to those parts of the insulating end plate (S) which are located between the grooves of the stack of rotor laminations (P) at the ends thereof, characterised in that only balancing weights (G ; G) of equal size are inserted into the pockets (T1 ; T11) on both sides of the measured balancing position (pocket T12) and are fixed in their final inserted position in the pockets by means of a locking means (locking cams R13 and R14 ; locking lugs N13 and N14).

2. A method as claimed in Claim 1, characterised in that the weights are arranged on both sides, distributed between the pockets asymmetrically in relation to one another.

3. A method as claimed in Claim 1 or 2, characterised in that all the weights are inserted simultaneously into the respective pockets by means of a supply arrangement which comprises a plurality of supply channels.

4. A method as claimed in one of the claims 1 to 3, characterised in that the respective pocket (T13, T14) is provided with a locking cam (R13, R14) which has a locking lug (N13, N14) which at least partially closes the inlet of the pocket (T13, T14) and which moves away when the balancing weight (G13, G14) is inserted and is automatically locked with insertion of the balancing weight (G13, G14).

5. A method as claimed in one of the claims 1 to 3, characterised in that the respective balancing weight is provided with a locking cam which has a locking lug which faces towards the walls of the pocket and which moves away when the balancing weight is inserted into the pocket and is automatically locked to the pocket when the balancing weight is in its final fixed position.

6. A method as claimed in one of the claims 1 to 5, characterised in that the respective locking cams are formed integrally on the pocket (T13, T14) or balancing weight.

7. A method as claimed in one of the claims 1 to 6, characterised in that the form of the pockets corresponds to an insertion direction for the balancing weights which extends parallel to the shaft (W) of the rotor (Fig. 1-4).

8. A method as claimed in one of the claims 1 to 6, characterised in that the form of the pockets corresponds to an insertion direction for the balancing weights which extends radially of the shaft (W) of the rotor (Fig. 5).

9. A method as claimed in one of the claims 1 to 8, characterised in that the pockets are of circular formation (Fig. 1, 3).

10. A method as claimed in one of the claims 1 to 8, characterised in that the pockets are of rectangular formation (Fig. 4, 5).

## Revendications

1. Procédé pour équilibrer des rotors bobinés de machines électriques comportant un disque isolant (S), qui est fixé sur la face frontale du paquet de tôles (P) du rotor et dans lequel sont ménagées par façonnage des cavités servant à recevoir un poids d'équilibrage enfichable (G) maintenu selon un ajustement serré, les cavités étant formées par façonnage respectivement directement dans les parties du disque isolant (S), qui s'appliquent, entre les encoches du paquet de tôles (P) du rotor, contre la face frontale de ce dernier, caractérisé par le fait que seuls des poids d'équilibrage (G ; G) de même taille sont enfichés dans les cavités (T1 ; T11) situées des deux côtés

de la position d'équilibrage mesurée (cavité T12) et sont fixés dans les cavités, respectivement dans leur position finale enfichée, au moyen d'un dispositif de fermeture à encliquetage (organes saillants d'encliquetage R13 ou R14 ; becs d'encliquetage N13 ou N14).

2. Procédé suivant la revendication 1, caractérisé par le fait que les poids sont disposés en étant répartis de façon dissymétrique des deux côtés des cavités.

3. Procédé suivant la revendication 1 ou 2, caractérisé par le fait que tous les poids sont enfichés simultanément dans les cavités respectives, au moyen d'un dispositif d'amenée comportant plusieurs canaux d'amenée.

4. Procédé suivant l'une des revendications 1 à 3, caractérisé par le fait que respectivement la cavité (T13 ou T14) comportant un organe saillant d'encliquetage (R13 ou R14) est munie d'un bec d'encliquetage (N13 ou N14) fermant au moins partiellement l'ouverture d'enfichage de la cavité (T13 ou T14) et qui est repoussé lors de l'enfichage du poids d'équilibrage (G13 ou G14) et s'encliquette automatiquement avec le poids d'équilibrage (G13 ou G14) enfiché.

5. Procédé suivant l'une des revendications 1 à 3, caractérisé par le fait que respectivement le poids d'équilibrage comportant un organe saillant d'encliquetage est muni d'un bec d'encliquetage dirigé vers une paroi de la cavité et qui est repoussé lors de l'enfichage du poids d'équilibrage dans la cavité et se verrouille automatiquement avec la cavité lorsque le poids d'équilibrage est dans la position finale fixée.

6. Procédé suivant l'une des revendications 1 à 5, caractérisé par le fait que les organes saillants d'encliquetage sont formés respectivement par façonnage d'un seul tenant dans la cavité (T13 ou T14) ou sur le poids d'équilibrage.

7. Procédé suivant l'une des revendications 1 à 6, caractérisé par le fait que les cavités sont réalisées conformément à une direction d'enfichage, s'étendant parallèlement à l'arbre (W) du rotor, des poids d'équilibrage (figures 1-4).

8. Procédé suivant l'une des revendications 1 à 6, caractérisé par le fait que les cavités sont réalisées conformément à une direction d'enfichage, s'étendant radialement par rapport à l'arbre (W) du rotor, pour les poids d'équilibrage (figure 5).

9. Procédé suivant l'une des revendications 1 à 8, caractérisé par le fait que les cavités sont réalisées avec une forme circulaire (figures 1, 3).

10. Procédé suivant l'une des revendications 1 à 8, caractérisé par le fait que les cavités sont réalisées avec une forme rectangulaire (figures 4, 5).

FIG 1

FIG 2

FIG 3

FIG 4

FIG 5